# EUROPÄISCHE PATENTSCHRIFT

(11) **EP 3 730 201 B1**
(45) Veröffentlichungstag und Bekanntmachung des Hinweises auf die Patenterteilung: **21.05.2025**
(21) Anmeldenummer: 20180531.4
(22) Anmeldetag: 21.03.2013
(51) Int. Cl.: B01D 46/52, B01D 46/00, F02M 35/024

(54) **VERFAHREN ZUR HERSTELLUNG EINES MIT EINEM DICHTUNGSTEIL VERSEHENEN FILTERELEMENTS**
METHOD FOR PRODUCING A FILTER ELEMENT PROVIDED WITH A SEALING PART
PROCÉDÉ DESTINÉ À FABRIQUER UN ÉLÉMENT DE FILTRE POURVU D'UNE PIÈCE D'ÉTANCHÉITÉ

(30) Priorität: 21.03.2012 DE 102012005530
(43) Veröffentlichungstag der Anmeldung: 28.10.2020
(62) Teilanmeldung aus: 13713798.0
(73) Patentinhaber: MANN+HUMMEL GmbH, 71636 Ludwigsburg (DE)
(72) Erfinder: Sudermann, Arthur, 71711 Steinheim (DE); Wagner, Fabian, 72127 Kusterdingen (DE); Sieber, Thomas, 84163 Marklkofen (DE); Görg, Günter, 71696 Möglingen (DE); Metzger, Michael, 71334 Waiblingen (DE); Röhrig, Markus, 84036 Landshut (DE); Jessberger, Thomas, 71679 Asperg (DE); Dirnberger, Timo, 71672 Marbach (DE); Joos, Bernd, 73547 Lorch (DE)
(74) Vertreter: Mann + Hummel Intellectual Property

(56) Entgegenhaltungen:
- EP-A2- 2 140 922
- WO-A1-2006/017790
- US-A- 5 529 476
- US-A1- 2009 255 227

## Beschreibung

### Technisches Gebiet

Die Erfindung bezieht sich auf ein Verfahren zur Herstellung eines mit einem Dichtungsteil versehenen Filterelements.

### Stand der Technik

In der WO 2009/150165 A1 wird eine Filtereinrichtung zur Filtration gasförmiger Fluide beschrieben, die ein Filtereinsatzteil mit einem Filtermedium und einem Dichtungselement aufweist, welches zwischen Dichtstegen an Gehäuseteilen des Filtergehäuses festgeklemmt ist. Das Filterelement ist rechteckförmig ausgebildet und besteht aus einem gefalteten Filterpapier, das im Randbereich umlaufend von dem Dichtelement eingefasst ist. Ein Dichtabschnitt des Dichtelementes ragt in montierter Position in einen Aufnahmekanal ein, der an einem der Gehäuseteile gebildet ist. Ein zweites Gehäuseteil überdeckt das Dichtungselement und beaufschlagt den Dichtabschnitt quer zur Montagerichtung des Filtereinsatzteils. Weitere Dichtungsvarianten für Filtereinrichtungen sind aus US 5 529 476 A, US 2009/255227 A1, EP 2 140 922 A2, WO 2006/017790 A1 und DE 2 301 635 A1 bekannt.

Das am Filterelement umlaufende Dichtungselement wird üblicherweise angespritzt bzw. angeschäumt, wofür Gießschalen vorgesehen sind, in die das Dichtungsmaterial im nicht ausgehärteten Zustand eingebracht wird, woraufhin das Dichtungselement eingesetzt wird. Nach dem Aushärten ist das Dichtungsmaterial fest mit dem Randbereich des Filterelementes verbunden. In die Gießschale, in die das nicht ausgehärtete Dichtungsmaterial eingebracht wird, sind Entlüftungsöffnungen eingebracht, durch die Dichtungsmaterial austreten kann. Nach dem Aushärten befinden sich an der Außenseite des Dichtungselementes im Bereich der Entlüftungsöffnungen tropfenförmige Erhebungen aus Dichtungsmaterial, welche abgeschnitten werden müssen, um eine glatte Dichtfläche an dem Dichtungselement zu erhalten.

### Offenbarung der Erfindung

Der Erfindung liegt die Aufgabe zugrunde, mit einfachen Maßnahmen ein Filtereinsatzteil, das ein Filterelement und ein Dichtungsteil umfasst, herzustellen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf die Herstellung eines Filtereinsatzteils für eine Filtereinrichtung, welche vorzugsweise zur Gasfiltration, zum Beispiel zur Filtration der Ansaugluft für eine Brennkraftmaschine eingesetzt wird. Grundsätzlich kommt im Rahmen der Offenbarung aber auch eine Verwendung des Filtereinsatzteils in einer Filtereinrichtung zur Flüssigkeitsfiltration in Betracht, beispielsweise als Kraftstoff- oder Ölfilter.

Das Filtereinsatzteil umfasst ein Filterelement sowie ein am Filterelement angeordnetes, vorzugsweise umlaufendes Dichtungsteil. Das Filtereinsatzteil wird in ein Filtergehäuse der Filtereinrichtung eingesetzt, wobei das Dichtungsteil die Roh- von der Reinseite des Filterelementes separiert und im montierten Zustand an einer Wandung des Filtergehäuses dichtend anliegt. Es ist beispielsweise möglich, dass ein Dichtabschnitt des Dichtungsteils in einem Aufnahmekanal des Gehäuses aufgenommen ist und von einem weiteren Gehäuseteil, beispielsweise einem Deckel, mit einer Kraft beaufschlagt wird. Die Beaufschlagungsrichtung ist hierbei entweder parallel zur Durchströmungsrichtung des Filterelementes, also axial, oder quer zur Durchströmungsrichtung, also radial.

Bei dem Filterelement handelt es sich beispielsweise um ein quaderförmiges Filterelement, welches umlaufend von dem Dichtungsteil eingefasst ist. Das Filterelement kann gegebenenfalls aus einem zickzackförmig gefalteten Filterpapier bestehen.

Zur Herstellung des Dichtungsteils am Filterelement des Filtereinsatzteils werden zumindest zwei Gießschalenteile verwendet, welche so ausgebildet sind, dass zwischen den Gießschalenteilen eine Gießkammer gebildet ist, die dazu dient, das Dichtungsmaterial im nicht ausgehärteten Zustand aufzunehmen. Insbesondere werden zur Bildung der Kammer die zumindest zwei Gießschalenteile zusammengesetzt. Die Gießkammer wird mit dem Dichtungsmaterial gefüllt und kann anschließend aushärten, wodurch man das Dichtungsteil erhält. Die Gießkammer ist beispielsweise so ausgebildet, dass eine erste Kammerwand der Gießkammer von dem ersten Gießschalenteil und eine zweite Kammerwand der Gießkammer von dem zweiten Gießschalenteil gebildet wird, wobei das Dichtungsteil im ausgehärteten, abgebundenen Zustand Dichtflächen aufweist, die zumindest jeweils einem Abschnitt der Kammerwände unterschiedlicher Gießschalenteile entsprechen. Somit wird über jedes Gießschalenteil zumindest eine Dichtfläche am Dichtungsteil erzeugt.

Des Weiteren ist vorgesehen, dass in der Gießkammer ein Kompensationsraum zum Ausbreiten des Dichtungsmaterials während des Aushärtungsprozesses vorgesehen ist. Zusätzlich oder alternativ zum Kompensationsraum innerhalb der Gießkammer kommt auch eine Ausführung in Betracht, bei der der Kompensationsraum außerhalb der Gießkammer angeordnet und mit der Gießkammer verbunden ist, so dass auch in dieser Ausführung während des Aushärteprozesses Dichtungsmaterial in den Kompensationsraum übertreten kann. Die sich in den Kompensationsraum ausbreitende Stirnseite des Dichtungsteils bildet nicht zwingend eine Dichtfläche, so dass die exakte Geometrie dieser Stirnseite des Dichtungsteils keine entscheidende Rolle für die Abdichtung zwischen Roh- und Reinseite spielt. Man erhält auf diese Weise beim Herstellungsverfahren einen zusätzlichen Freiheitsgrad, indem die verwendete Menge an Dichtungsmaterial im nicht ausgehärteten Zustand lediglich innerhalb einer definierten Bandbreite liegen muss. Wird diese Bandbreite eingehalten, liegt mit dem Kompensationsraum ein ausreichend großes Kompensationsvolumen vor, in das sich überschüssiges Dichtungsmaterial ausbreiten kann, ohne dass dies die sonstige Geometrie des Dichtungsteils und insbesondere die Dichtflächen beeinflusst. Zusätzliche Entlüftungsöffnungen, die im Stand der Technik vorgesehen sind, können entfallen, so dass die Dichtflächen nach dem Aushärten des Dichtungsmaterials glattwandig und ohne überstehende Dichtnasen ausgeführt sind und kein oder nur ein reduzierter Nachbearbeitungsaufwand erforderlich ist.

Grundsätzlich möglich ist es, dass die Stirnfläche des in den Kompensationsraum einragenden Dichtungsteils an eine Dichtfläche angrenzt und mit der Dichtfläche einen Winkel einschließt, wobei gegebenenfalls auch Ausführungen möglich sind, in denen die Stirnfläche auf Abstand zu den Dichtflächen des Dichtungsteils liegt. Soweit die Stirnfläche keine Dichtungsfunktion hat, spielt das Maß, mit dem die Stirnfläche in den Kompensationsraum einragt, nur eine untergeordnete Rolle, was die Dosierung des Dichtungsmaterials innerhalb größerer Grenzen ermöglicht.

Als Dichtungsmaterial kommt beispielsweise ein PUR-Schaum (Polyurethan) in Betracht. Grundsätzlich können alle Dichtmaterialien eingesetzt werden, die im nicht ausgehärteten Zustand flüssig oder schaumartig sind und in die Gießkammer zwischen den beiden Gießschalenteilen eingefüllt werden können.

Das Filterelement, an dessen Randbereich das Dichtungsteil angefügt wird, wird bereits während des Herstellens des Dichtungsteils in die Gießschalenteile eingesetzt, so dass bereits im nicht ausgehärteten Zustand des Dichtungsmaterials ein Kontakt mit dem Randbereich des Filterelementes besteht. Nach dem Aushärten ist das Dichtungsteil fest mit dem Filterelement verbunden.

Der Kompensationsraum kann innerhalb eines Gießschalenteils bzw. im zusammengesetzten Zustand durch beide Gießschalenteile in einer erfindungsgemäßen Ausführung als ein abgeschlossener Raum ausgebildet sein, der Teil der Gießkammer ist bzw. mit der Gießkammer kommuniziert. Beim Herstellungsprozess wird die in die Gießkammer eingebrachte Menge an nicht ausgehärtetem Dichtungsmaterial so bemessen, dass im ausgehärteten Zustand die in den Kompensationsraum einragende Stirnfläche auf Abstand zum Boden oder der Decke des Kompensationsraums liegt. Der Abstand stellt eine Sicherheitsreserve dar, so dass Schwankungen in der Einfüllmenge des Dichtungsmaterials oder im Ausdehnungsverhalten des aushärtenden Dichtungsmaterials kompensiert werden können. Insbesondere kann ein nachträgliches Beschneiden des Dichtungsteils entfallen.

Gemäß einer weiteren erfindungsgemäßen Ausführung ist der Kompensationsraum als ein nach außen offener Raum ausgebildet, der aber mit der Gießkammer kommuniziert, so dass aus der Gießkammer Dichtungsmaterial in den Kompensationsraum einfließen kann und sich dort ausbreiten kann. Auch in dieser Ausführung genügt es, eine lediglich annähernd bestimmte Menge an Dichtungsmaterial einzufüllen, da Schwankungen über den offenen Kompensationsraum aufgenommen werden können. Der offene Kompensationsraum wird erfindungsgemäß von beiden Gießschalenteilen begrenzt, was das Entformen nach Abschluss des Gießprozesses vereinfacht.

Der Kompensationsraum sowie der in den Kompensationsraum einragende Abschnitt des Dichtungsteils liegen erfindungsgemäß auf Abstand zur zugewandten Seitenfläche des Filterelementes.

Des Weiteren kann es zweckmäßig sein, das Dichtungsteil an zumindest einer Seite mit einer Fase zu versehen, die entweder nach dem Aushärten eingebracht wird, beispielsweise durch Zurechtschneiden des Dichtungsteils, oder bereits während des Gießprozesses durch entsprechende Ausgestaltungen der Gießschalenteile erzeugt wird. Mit der Fase bzw. den Fasen wird die Montage des Filtereinsatzteils im Filtergehäuse erleichtert.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine perspektivische Ansicht zweier Gießschalenteile, die eine Gießkammer zum Herstellen eines Dichtungsteils an einem Filterelement begrenzen,
Fig. 2 einen Schnitt durch eine Filtereinrichtung mit einem Filtereinsatz, der ein Filterelement und ein an den Randbereich des Filterelementes angegossenes Dichtungsteil aufweist,
Fig. 3 in einer Ausführungsvariante zwei Gießschalenteile zur Herstellung eines Dichtungsteils an einem Filterelement,
Fig. 4 das Filterelement gemäß Fig. 3 im eingebauten Zustand,
Fig. 5 ein Dichtungselement in Alleindarstellung,
Fig. 6 ein weiteres Dichtungselement.

In den Figuren sind gleiche Bauteile mit gleichen Bezugszeichen versehen.

### Ausführungsform(en) der Erfindung

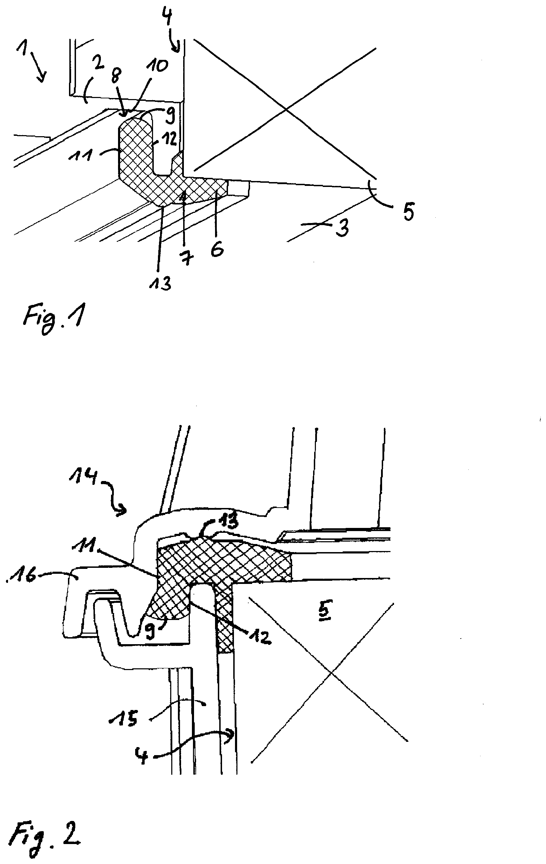

In Fig. 1 ist eine Gießvorrichtung 1 mit einem ersten Gießschalenteil 2 und einem zweiten Gießschalenteil 3 dargestellt, die dazu dient, ein Filtereinsatzteil 4 herzustellen, das ein Filterelement 5 sowie ein Dichtungsteil 6 umfasst. Mittels der Gießvorrichtung 1 mit den Gießschalenteilen 2, 3 kann das Dichtungsteil 6 hergestellt und mit dem Randbereich des Filterelementes 5 durch Gießen oder Anspritzen verbunden werden. Bei dem Filterelement 5 handelt es sich beispielsweise um ein Luftfilterelement, das zum Beispiel aus einem gefalteten Filterpapier besteht und in Rechteckform vorliegt, wobei der Randbereich des Filterelementes 5 an zwei Filterelementseiten mit dem umlaufenden Dichtungsteil 6 versehen wird.

Die beiden Gießschalenteile 2, 3 begrenzen eine Gießkammer 7, in die das Dichtungsmaterial im nicht ausgehärteten Zustand eingefüllt wird. Dies erfolgt vorteilhaft in der Weise, dass zunächst die beiden Gießschalenteile 2, 3 zusammengefügt werden, anschließend das Filterelement 5 in die vorgesehene Position gebracht wird und schließlich das Dichtungsmaterial im nicht ausgehärteten Zustand in die Gießkammer 7 eingefüllt wird. Möglich ist es aber auch, zunächst das Dichtungsmaterial in die Gießkammer einzufüllen und anschließend das Filterelement in seine vorgesehene Position zu bringen, in der der Randbereich in das Dichtungsmaterial einragt. Nach dem Aushärten des Dichtungsmaterials können die Gießschalenteile 2, 3 entfernt werden, das Dichtungsteil 6 behält seine Form und ist fest mit dem Randbereich des Filterelementes 5 verbunden.

In das Gießschalenteil 2 ist ein Kompensationsraum 8 eingebracht, der mit der Gießkammer 7 verbunden ist und als ein geschlossener Raum mit U-förmigem Querschnitt ausgebildet ist. Mit dem Einfüllen erstreckt sich das Dichtungsmaterial bis in den Kompensationsraum 8 hinein. Die Menge eingefüllten Dichtungsmaterials ist hierbei so bemessen, dass auch nach dem Aushärten die Stirnfläche 9 des in den Kompensationsraum 8 einragenden Dichtungsmaterials auf Abstand zum Boden bzw. der Decke 10 des U-förmigen, geschlossenen Kompensationsraums 8 liegt. Dieser Abstand stellt eine Kompensationsreserve dar und ermöglicht es, Schwankungen bei der Bemessung der Dichtmaterialmenge oder bei sonstigen, das Volumen im ausgehärteten Zustand bestimmenden Prozessparametern zu kompensieren.

Die beiden seitlichen Dichtflächen 11 und 12 des in den Kompensationsraum 8 einragenden Abschnittes des Dichtungsteils 6 werden von den gegenüberliegenden Kammerwänden des Kompensationsraums 8 begrenzt. Die Dichtflächen 11 und 12 können im eingebauten Zustand des Filtereinsatzteils mit einer Dichtkraft beaufschlagt sein.

Der Kompensationsraum 8 sowie der in den Kompensationsraum 8 einragende Abschnitt des Dichtungsteils 6 liegen auf Abstand zur zugewandten Seitenfläche des Filterelementes 5. Zwischen der Außenseite des ersten Gießschalenteils 2 und der Seitenfläche des Filterelementes 5 erstreckt sich ein weiterer Abschnitt des Dichtungsteils 6, welcher den Randbereich des Filterelementes 5 einfasst.

Die zweite Gießschale 3 begrenzt eine weitere Dichtfläche 13 an einem Abschnitt des Dichtungsteils 6. Diese weitere Dichtfläche 13 liegt auf Abstand zu den ersten beiden Dichtflächen 11 und 12, die parallel zueinander liegen und den Kammerwänden des Kompensationsraums 8 entsprechen. In Fig. 2 ist eine Filtereinrichtung 14 dargestellt, die ein Filtereinsatzteil 4 aufweist, welches gemäß der Ausführung nach Fig. 1 hergestellt ist. Die Filtereinrichtung 14 weist ein Filtergehäuse 15 auf, in das das Filtereinsatzteil 4 einsetzbar ist, wobei das Dichtungsteil 6 am Randbereich an der Stirnseite des Filtergehäuses 15 aufliegt und von einem Deckel 16, welcher mithilfe eines nicht gezeigten Verbindungselementes wie zum Beispiel einer Schraube am Filtergehäuse 15 befestigbar ist, beaufschlagt wird. Die Beaufschlagungsrichtung der Dichtkraft zum Abdichten mittels der Dichtflächen 11 und 12 verläuft quer zur Durchströmungsrichtung des Filterelementes 5. Es handelt sich also zumindest im Wesentlichen um eine radiale Dichtung. Eine zusätzliche (kleinere) Komponente der Dichtkraft wird über die Dichtfläche 13 parallel zur Durchströmungsrichtung des Filterelementes 5 eingeleitet.

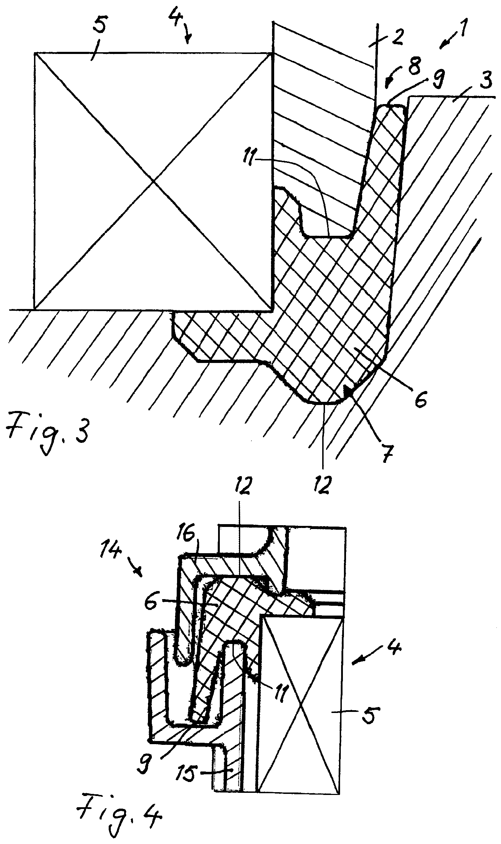

In den Fig. 3 und 4 ist ein weiteres Ausführungsbeispiel dargestellt. Fig. 3 zeigt eine Gießvorrichtung 1 mit zwei Gießschalenteilen 2 und 3, zwischen denen eine Gießkammer 7 zum Herstellen eines Dichtungsteils 6 an einem Filterelement 5 gebildet ist, wobei das Filterelement 5 und das Dichtungsteil 6 gemeinsam ein Filtereinsatzteil 4 bilden. Die beiden Gießschalenteile 2 und 3 der Gießvorrichtung 1 begrenzen eine Gießkammer 7 zur Aufnahme des Dichtungsmaterials, außerdem ist ein offener Kompensationsraum 8 zwischen den beiden Gießschalenteile 2 und 3 vorgesehen, der nach außen, also zur Umgebung hin geöffnet ist. Mit dem Einfüllen des Dichtungsmaterials in die Gießkammer 7 breitet sich das Dichtungsmaterial auch in den Kompensationsraum 8 aus, welcher mit der Gießkammer 7 verbunden ist. Nach dem Aushärten ist an der offenen Stirnseite des in den Kompensationsraum einragenden Abschnittes des Dichtungsteils 6 eine Stirnfläche 9 gebildet, die jedoch keine Dichtungsfunktion im eingebauten Zustand des Filtereinsatzteils ausübt. Die Kammerwände der Gießkammer 7, die jeweils von Seitenwänden der Gießschalenteile 2 und 3 gebildet werden, definieren die Dichtflächen 11 und 12 des in der Gießkammer 7 ausgebildeten Abschnittes des Dichtungsteils 6.

In Fig. 4 ist die Filtereinrichtung 14 mit dem eingebauten Filtereinsatzteil 4 dargestellt. Das Dichtungsteil 6 wird von den einander zugewandten Stirnseiten des Filtergehäuses 15 und des Deckels 16 begrenzt und mit einer Dichtkraft beaufschlagt. Die Beaufschlagungsrichtung der Dichtkraft zum Abdichten mittels der Dichtflächen 11 und 12 verläuft parallel zur Durchströmungsrichtung des Filterelementes 5. Es handelt sich also zumindest im Wesentlichen um eine axiale Dichtung. Die freie Stirnseite 9 ragt in einen Aufnahmekanal ein, sie übernimmt jedoch keine Dichtfunktion.

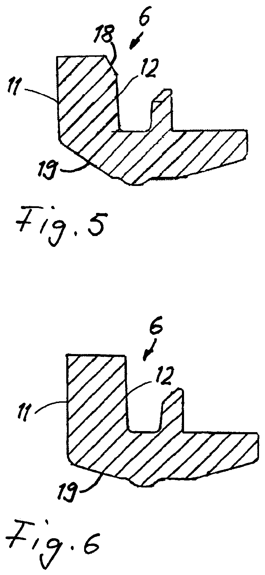

Wie den Fig. 5 und 6 zu entnehmen, können verschiedene Seiten des Dichtungsteils 6 mit einer Fase 18 bzw. 19 versehen sein. Dies erleichtert insbesondere das Einsetzen in das Filtergehäuse. Es können eine oder mehrere derartiger Fasen 18, 19 vorgesehen sein, deren Winkel an die jeweilige Einbausituation angepasst ist. Die Fasen 18, 19 werden entweder bereits während des Gießprozesses hergestellt, indem in den Gießschalenteilen korrespondierende Fasen vorgesehen sind. Die Fasen am Dichtungsteil 6 können auch nachträglich durch mechanische Bearbeitung erzeugt werden.

Bei den Baumformen gemäß den Fig. 5 und 6 verlaufen die Dichtflächen 11 und 12 im Wesentlichen parallel zur Durchströmungsrichtung des Filterelementes 5. Die Beaufschlagungsrichtung der Dichtkraft verläuft folglich quer zur Durchströmungsrichtung. Es handelt sich in diesen Fällen um radiale Dichtungen.

## Patentansprüche

1. Verfahren zur Herstellung eines mit einem Dichtungsteil (6) versehenen Filterelements (5), bei dem das Dichtungsmaterial im nicht ausgehärteten Zustand in eine Gießkammer (7) zwischen zumindest zwei Gießschalenteilen (2, 3) eingebracht wird, wobei die Gießkammer (7) so ausgebildet ist, dass an gegenüberliegenden Kammerwänden Dichtflächen (11, 12, 13) am Dichtungsteil (6) gebildet sind und dass in der Gießkammer (7) bzw. mit der Gießkammer (7) verbunden ein Kompensationsraum (8) zum Ausbreiten des Dichtungsmaterials vorgesehen ist, **dadurch gekennzeichnet, dass** das Filterelement (5) an den Gießschalenteilen (2, 3) angelegt und das Dichtungsmaterial unmittelbar an den Randbereich des Filterelements (5) angegossen, angespritzt bzw. angeschäumt wird, und dass die in den Kompensationsraum (8) einragende Stirnfläche (9) des Dichtungsteils (6) sich von den Dichtflächen (11, 12, 13) unterscheidet, wobei der Kompensationsraum (8) sowie der in den Kompensationsraum (8) einragende Abschnitt des Dichtungsteils (6) auf Abstand zur zugewandten Seitenfläche des Filterelementes (5) liegen, wobei entweder der Kompensationsraum (8) als abgeschlossener Raum innerhalb eines Gießschalenteils (2, 3) angeordnet ist und die in die Gießkammer (7) eingebrachte Menge an nicht ausgehärtetem Dichtungsmaterial so bemessen wird, dass im ausgehärteten Zustand die Stirnfläche (9) des Dichtungsteils (6) auf Abstand zur Decke (10) des Kompensationsraums (8) liegt, oder der Kompensationsraum (8) von beiden Gießschalenteilen (2, 3) begrenzt wird und als nach oben offener Raum ausgebildet ist, der mit der Gießkammer (7) kommuniziert.

2. Verfahren nach Anspruch 1, **dadurch gekennzeichnet, dass** als Dichtungsmaterial ein PUR-Schaum (Polyurethan) verwendet wird.

3. Verfahren nach Anspruch 1 oder 2, **dadurch gekennzeichnet, dass die** Stirnfläche (9) des Dichtungsteils (6) an mindestens eine Dichtfläche (11, 12, 13) am Dichtungsteil (6) angrenzt.

4. Verfahren nach einem der vorhergehenden Ansprüche, **dadurch gekennzeichnet, dass** nach dem Aushärten mindestens eine Seite des Dichtungsteils (6) mit einer Fase (18, 19) versehen wird.

## Claims

1. Method for manufacturing a filter element (5) provided with a sealing element (6), in which the sealing compound is introduced in the uncured state into a casting chamber (7) between at least two tundish parts (2, 3), wherein the casting chamber (7) is designed such that sealing surfaces (11, 12, 13) are formed on the sealing element (6) on opposite chamber walls, and that in the casting chamber (7) or connected to the casting chamber (7), a compensation space (8) is provided for spreading the sealing material, **characterized in that** the filter element (5) is placed on the tundish parts (2, 3) and the sealing material is cast, injection-molded or foamed directly on the peripheral area of the filter element (5), and that the end face (9) of the sealing element (6) projecting into the compensation space (8) differs from the sealing surfaces (11, 12, 13), wherein the compensation space (8) and the section of the sealing element (6) projecting into the compensation space (8) are at a distance from the side face of the filter element (5) facing it, wherein either the compensation space (8) is disposed as a closed space within a tundish part (2, 3) and the quantity of uncured sealing compound introduced into the casting chamber (7) is dimensioned such that, in the cured state, the end face (9) of the sealing element (6) lies at a distance from the ceiling (10) of the closed compensation space (8), or the compensation space (8) is bounded by both tundish parts (2, 3) and is designed as open space towards the top which communicates with the casting chamber (7).

2. Method according to claim 1, **characterized in that** a PUR foam (polyurethane) is used as sealing compound.

3. Method according to claim 1 or 2, **characterized in that** the end face (9) of the sealing element (6) adjoins at least one sealing surface (11, 12, 13) on the sealing element (6).

4. Method according to one of the preceding claims, **characterized in that** after curing at least one side of the sealing element (6) will be provided with a chamfer (18, 19).

## Revendications

1. Procédé de fabrication d'un élément filtrant (5) pourvu d'un élément d'étanchéité (6) et dans lequel le matériau d'étanchéité est introduit à l'état non durci dans une chambre de coulée (7) entre au moins deux parties du panier de coulée (2, 3), la chambre de coulée (7) étant conçue de telle manière que des surfaces d'étanchéité (11, 12, 13) sont formées sur l'élément d'étanchéité (6) sur des parois de chambre opposées et qu'un espace de compensation (8) pour répandre le matériau d'étanchéité est prévu dans la chambre de coulée (7) ou relié à la chambre de coulée (7), **caractérisé en ce que** l'élément filtrant (5) est appliqué sur les parties du panier de coulée (2, 3) et le matériau d'étanchéité est coulé, injecté ou appliqué par moussage directement sur la zone périphérique de l'élément filtrant (5), et **en ce que** la face d'extrémité (9) de l'élément d'étanchéité (6) pénétrant dans l'espace de compensation (8) diffère des surfaces d'étanchéité (11, 12, 13), l'espace de compensation (8) et la portion de l'élément d'étanchéité (6) pénétrant dans l'espace de compensation (8) sont à une certaine distance de la surface latérale de l'élément filtrant (5) qui lui fait face, soit l'espace de compensation (8) étant disposé en tant qu'espace fermé à l'intérieur d'une partie du panier de coulée (2, 3) et la quantité de matériau d'étanchéité non durci introduite dans la chambre de coulée (7) étant ainsi dimensionnée, **en ce que**, à l'état durci, la face d'extrémité (9) de l'élément d'étanchéité (6) se trouve à distance du plafond (10) de l'espace de compensation fermé (8), ou l'espace de compensation (8) étant formé en tant qu'espace délimité par les deux parties du panier de coulée (2, 3) et ouvert vers le haut qui communique avec la chambre de coulée (7).

2. Procédé selon la revendication 1, **caractérisé en ce qu'**une mousse PUR (polyuréthane) est utilisée en tant que matériau d'étanchéité.

3. Procédé selon la revendication 1 ou 2, **caractérisé en ce que** la face d'extrémité (9) de l'élément d'étanchéité (6) est adjacente au moins à une surface d'étanchéité (11, 12, 13) sur l'élément d'étanchéité (6).

4. Procédé selon l'une quelconque des revendications précédentes, **caractérisé en ce qu'**au moins un côté de l'élément d'étanchéité (6) est pourvu d'un chanfrein (18, 19) après le durcissement.
